(19) **Europäisches Patentamt**

**European Patent Office**

**Office européen des brevets**

(11) **EP 0 714 052 B1**

(12) **EUROPÄISCHE PATENTSCHRIFT**

(45) Veröffentlichungstag und Bekanntmachung des Hinweises auf die Patenterteilung:
**10.02.1999 Patentblatt 1999/06**

(51) Int Cl.⁶: **G05B 19/4062**

(21) Anmeldenummer: **95117303.8**

(22) Anmeldetag: **03.11.1995**

(54) **Verfahren zur Überwachung des Öffnungs- und Schliessvorgangs bei einem System mit mindestens einem elektromotorisch bewegten Teil**

Method for monitoring the opening and closing process in a system with at least one electric motor driven part

Méthode de surveillance de l'ouverture et de la fermeture dans un système comprenant au moins un élément mobile électro-motorisé

(84) Benannte Vertragsstaaten:
**DE ES FR GB IT SE**

(30) Priorität: **26.11.1994 DE 4442171**

(43) Veröffentlichungstag der Anmeldung:
**29.05.1996 Patentblatt 1996/22**

(73) Patentinhaber: **TEMIC TELEFUNKEN microelectronic GmbH**
**74072 Heilbronn (DE)**

(72) Erfinder:
• **Driendl, Dieter**
**D-88693 Deggenhausertal (DE)**
• **Schulter, Wolfgang**
**D-88709 Meersburg (DE)**
• **Joos, Ulrich**
**D-88149 Nonnenhorn (DE)**
• **Fischer, Manfred**
**D-88094 Oberteuringen (DE)**

(74) Vertreter: **Maute, Hans-Jürgen, Dipl.-Ing.**
**TEMIC TELEFUNKEN microelectronic GmbH**
**Postfach 35 35**
**74025 Heilbronn (DE)**

(56) Entgegenhaltungen:
**GB-A- 2 221 769**

**Beschreibung**

Mechanische Systeme mit elektromotorisch bewegten Teilen sind vielfältig in Gebrauch - beispielsweise werden in Kraftfahrzeugen mit derartigen Systemen oftmals die Schließfunktionen von Seitenfenstern und Schiebedach realisiert. Insbesondere bei automatisch ablaufenden Schließvorgängen ist jedoch eine Einklemmgefahr bezüglich der Einklemmung von Körperteilen oder Gegenständen gegeben; daher sollte aus Sicherheitsgründen ein Einklemmschutz vorhanden sein, wie er bereits für einige Anwendungsfälle per Verordnung vorgeschrieben wird.
Die Überwachung des Öffnungs-/Schließvorgangs zur Gewährleistung eines derartigen Einklemmschutzes kann beispielsweise mittels optischer Detektoren zur Detektion von etwaigen Hindernissen oder durch Bestimmung und Auswertung der beim Einklemmvorgang entstehenden Klemmkraft bzw. des zeitlichen Verlaufs der Klemmkraft erfolgen. Da die direkte Bestimmung der Klemmkraft (beispielsweise mittels Kraftsensoren oder Drehmomentsensoren) wegen der benötigten Sensoren recht kostspielig ist, wird bei den meisten Überwachungsverfahren die Klemmkraft bzw. deren zeitlicher Verlauf indirekt durch Erfassung einer Motorkenngröße bzw. eines Motorparameters (beispielsweise der Motordrehzahl) als Meßgröße ermittelt, diese durch Vergleich mit einer Referenzmessung bzw. Referenzmessungen ausgewertet und beim Überschreiten bestimmter Grenzwerte/Schwellwerte eine bestimmte Reaktion initiiert (beispielsweise eine Reversierung des Motorantriebs vorgenommen oder der Motorstrom abgeschaltet). Als Stand der Technik hierfür kann GB-A-2 221 769 angesehen werden.
Nachteilig bei diesen Verfahren ist die oftmals unzureichende Überwachung des Öffnungs-/Schließvorgangs und der damit verbundene ungenügende Einklemmschutz, da

- nur ein tendenzieller Zusammenhang zwischen der erfaßten Meßgröße und der daraus abgeleiteten kraftähnlichen Größe gegeben ist, so daß erhebliche Ungenauigkeiten bei der Bestimmung der realen Klemmkraft auftreten,

- sich Exemplarstreuungen, Alterungseffekte, Umgebungseinflüsse (Temperatur, Feuchtigkeit etc.) auf die Auswertung (Vergleich mit der bei anderen Bedingungen vorgenommenen Referenzmessung) sehr stark auswirken,

- wegen der Ortsorientierung bzw. Ortsabhängigkeit (Messung und Auswertung erfolgen in starrer Abhängigkeit von der Motorposition, d.h. in äquidistanten Schritten bezüglich der Motorumdrehung) die Ansprechzeit beim Auftreten kritischer Einklemmsituationen oft zu groß ist (durch das mit einer Einklemmung verbundene Absinken der Motordrehzahl wird die zeitliche Auflösung verringert).

Der Erfindung liegt die Aufgabe zugrunde, ein Verfahren gemäß dem Oberbegriff des Patentanspruchs 1 anzugeben, das einen wirksamen Einklemmschutz unter allen Umgebungsbedingungen bzw. Betriebsbedingungen gewährleistet. Diese Aufgabe wird gemäß der Erfindung durch die Merkmale im Kennzeichen des Patentanspruchs 1 gelöst. Vorteilhafte Weiterbildungen und Ausgestaltungen des Verfahrens ergeben sich aus den Unteransprüchen.
Beim vorgestellten Verfahren wird die Klemmkraft aus dem Betriebszustand des Motors unter Berücksichtigung aller Motorparameter abgeleitet: die erforderliche Schließenergie wird nach dem Energieerhaltungssatz aus der dem Motor zugeführten elektrischen Energie bestimmt (diese ist von der Versorgungsspannung, dem Motorstrom und dem Antriebswirkungsgrad abhängig), die auftretenden Kräfte (Klemmkraft und Reibungskraft) aus der Schließenergie unter Berücksichtigung der Motorkenngrößen (Motordrehzahl bzw. Motorperiodendauer und Übersetzungsverhältnis) ermittelt, eine Einklemmsituation durch Auswertung des zeitlichen Verlaufs der Reibungskraft bzw. Klemmkraft detektiert (beispielsweise durch Vergleich mit einem konstanten Schwellwert oder durch Auswertung des zeitlichen Profils) und die Schließenergie beim Überschreiten bzw. Erreichen vorgegebener Grenzwerte durch Abschalten bzw. Reversieren des Motorantriebs reduziert. Durch eine zeitorientierte Verfahrensweise - Abtastung der Eingangsgrößen zu den Meßzeitpunkten und Auswertung (die Ermittlung der momentan wirkenden Klemmkraft) erfolgen in äquidistanten Zeitschritten mit vorgebbarer Schrittweite (beispielsweise folgen die Meßzeitpunkte im Abstand von einer Millisekunde aufeinander) -, kann eine kontinuierliche Klemmkraftbestimmung mit einer sehr hohen zeitlichen Auflösung vorgenommen werden. Zur Bestimmung der Klemmkraft und zur Auswertung des zeitlichen Kraftverlaufs wird ein Zeitfenster mit vorgebbarer Fensterbreite herangezogen, die der Zeitdifferenz zwischen dem aktuellen Meßzeitpunkt und einem Referenzzeitpunkt entspricht. Die Fensterbreite wird so gewählt, daß der am langsamsten ablaufende der möglichen Einklemmfälle noch sicher detektiert werden kann: hierzu wird mindestens ein Referenzzeitpunkt auf einen Zeitpunkt gelegt, an dem noch keine Klemmkraft auftritt und hieraus die Reibungskraft bestimmt. Bei der Auswertung dient das Zeitfenster dazu, einen gewichteten Mittelwert aus den Meßwerten und Motorkenngrößen des aktuellen Meßzeitpunkts und des Referenzzeitpunkts zu bilden. Der Antriebswirkungsgrad wird vorzugsweise während der Schließbewegung kontinuierlich an Versorgungsspannung und Betriebstemperatur angepaßt, und dadurch dessen Abhängigkeit von den äußeren Bedingungen eliminiert.
Das vorgestellte Verfahren vereinigt mehrere Vorteile in sich:

- da die zur Beurteilung einer Einklemmsituation ermittelte Klemmkraft durch Auswertung aller physikalisch relevanten Betriebsparameter des Motors (Wirkungsgrad, Strom, Spannung, Ankerumdrehungszahl bzw. Ankerperiode) und somit in der exakten physikalischen Dimension bestimmt wird, stellt diese ein direktes Abbild der tatsächlich wirkenden Klemmkraft dar; ein Einklemmvorgang kann daher unter allen Betriebsbedingungen sehr sicher und präzise detektiert werden,

- aufgrund der zeitorientierten Verfahrensweise ist eine kontinuierliche Klemmkraftbestimmung mit sehr hoher zeitlicher Auflösung möglich; dies wirkt sich insbesondere bei abrupten Einklemmvorgängen mit Klemmkörpern hoher Steifigkeit vorteilhaft aus, da hier die Flankensteilheit des Kraftanstiegs sehr große Werte annimmt - somit lassen sich auch sehr rasch verlaufende Einklemmvorgänge sicher detektieren und entsprechende Gegenmaßnahmen ergreifen,

- es besteht keinerlei Abhängigkeit der Einklemmsituation von den äußeren Randbedingungen; eine Einklemmdetektion kann daher auch bei einer Variation der Umgebungsbedingungen, der Versorgungsspannung, der Steifigkeit des Klemmkörpers bzw. des Antriebs, der Reibungsverhältnisse im Antrieb und der Serienstreuung der Antriebscharakteristik sicher erfolgen,

- es sind reproduzierbare Klemmkraftgrenzwerte bzw. Mindestkraftgrenzen mit geringer Streuung auch bei Einklemmkörpern unterschiedlicher Steifigkeit bzw. bei unterschiedlich schwergängigen Getriebe-Mechanik-Anordnungen gegeben.

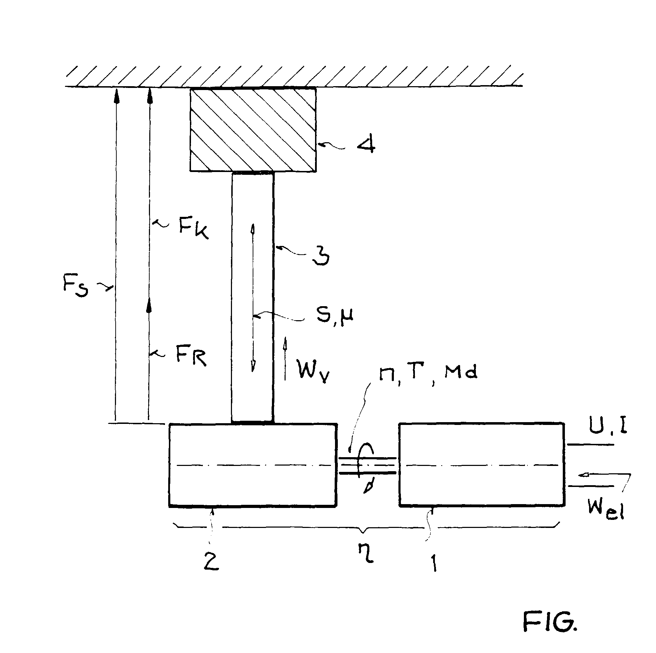

Das vorgestellte Verfahren soll weiterhin anhand eines Ausführungsbeispieles näher erläutert werden. Gemäß der Figur wird die dem Motor 1 zugeführte elektrische Arbeit $W_{el}$ in Vortriebsarbeit $W_V$ für das translatorisch bewegte Teil 3 und beim Erreichen des Klemmkörpers 4 (im Einklemmfall) zusätzlich in Verformungsarbeit umgesetzt. Unter Berücksichtigung des Gesamtwirkungsgrads $\eta$ von Motor 1 und Getriebe 2 ergibt sich aus dem Energieerhaltungssatz:

$$W_V = \eta \cdot W_{el} \qquad (1).$$

Die dem Motor zugeführte elektrische Arbeit $W_{el}$ ist wie folgt definiert:

$$W_{el} = U \cdot I \cdot t \qquad (2),$$

wobei U die Betriebsspannung, I der Motorstrom und t die Zeitdauer ist.
Für die Vortriebsarbeit $W_V$ bzw. im Einklemmfall für die resultierende Verformungsarbeit erhält man unter Vernachlässigung der bewegten Massen:

$$W_V = F_S \cdot s \qquad (3),$$

wobei $F_S$ die Gesamtkraft und s der zurückgelegte Weg des bewegten Teils 3 ist.
Im Einklemmfall setzt sich die vom Motorantrieb aufgebrachte Gesamtkraft bzw. Summenkraft $F_S$ aus der Klemmkraft $F_K$ und der Reibkraft $F_R$ zusammen:

$$F_S = F_K + F_R \qquad (4).$$

Für die Klemmkraft $F_K$ ergibt sich somit der folgende Zusammenhang:

$$F_K = F_S - F_R = \frac{W_V}{s} - F_R = \eta \cdot \frac{W_{el}}{s} - F_R = \eta \cdot \frac{U \cdot I \cdot t}{s} - F_R \qquad (5).$$

Beim gegebenen translatorischen Übersetzungsverhältnis Ü des Antriebs kann aus der Ankerdrehzahl n des Motors 1 bzw. der Ankerperiode T des Motors 1 und der Zeitdauer t der zurückgelegte Weg s des Teils 3 bestimmt

werden:

$$s = \ddot{U} \cdot n \cdot t \quad bzw. \quad s = \ddot{U} \cdot \frac{t}{T} \tag{6}.$$

Hiermit ergibt sich aus Gleichung (5) für die Klemmkraft $F_K$:

$$F_K = \eta \cdot \frac{U \cdot I \cdot T}{\ddot{U}} - F_R \tag{7}$$

bzw. für die zeitliche Abhängigkeit der Klemmkraft $F_K(t)$:

$$F_K(t) = \eta(U) \frac{U(t) \cdot I(t) \cdot T(t)}{\ddot{U}} - F_R(t) \tag{8}.$$

Anhand dieser Gleichung wird der zeitliche Verlauf der Klemmkraft $F_K(t)$ bestimmt: Betriebsspannung U, Motorstrom I und Periodendauer T der Ankerumdrehung lassen sich auf meßtechnisch einfache und kostengünstige Art und Weise erfassen, das translatorische Übersetzungsverhältnis Ü ist konstruktiv vorgegeben und ändert sich bei hinreichend stabiler Ausführung des Antriebs nur geringfügig bei Krafteinwirkung. Der Wirkungsgrad $\eta$ stellt eine motorspezifische bzw. getriebespezifische und von der Versorgungsspannung U abhängige Größe dar; anhand der Motorkennlinie wird dessen Spannungsabhängigkeit berücksichtigt und durch Erfassung der Temperatur kann dessen Temperaturabhängigkeit eliminiert werden. Die im translatorisch bewegten Teil 3 auftretende und durch Änderungen des Reibungskoeffizienten $\mu$ infolge von Temperatur-, Verschmutzungs-, und Alterungseinflüssen extremen Schwankungen unterworfene und zudem je nach konstruktiver Ausführung der Antriebslagerung und Führung variierende Reibkraft $F_R$, wird durch mindestens eine Referenzmessung aus dem Betriebszustand des Motors 1 unter der Voraussetzung bestimmt, daß keine Einklemmsituation vorliegt (d.h. diese Referenzmessung muß zu einem Referenzzeitpunkt $t_R$ erfolgen, zu dem die Klemmkraft $F_K = 0$ ist).
In diesem Fall ergibt sich aus der Gleichung (8) für den Referenzzeitpunkt $t_R$ folgender Zusammenhang ($F_K(t_R) = 0$):

$$F_R(t_R) = \eta(U) \cdot \frac{U(t_R) \cdot I(t_R) \cdot T(t_R)}{\ddot{U}} \tag{9}$$

Zum Meßzeitpunkt $t_M$, zu dem eine Einklemmung auftreten kann, ist die relevante Klemmkraft $F_K(t_M)$ somit aus den Gleichungen (8) und (9) durch Differenzbildung bestimmbar:

$$F_K(t_M) = \eta(U) \cdot \frac{U(t_M) \cdot I(t_M) \cdot T(t_M)}{\ddot{U}} - \eta(U) \cdot \frac{U(t_R) \cdot I(t_R) \cdot T(t_R)}{\ddot{U}} \tag{10}.$$

Die Indices M und R beschreiben die Abtastzeitpunkte für den Meßvorgang, wobei der Index M den aktuellen Zeitpunkt und der Index R den Zeitpunkt einer vorangegangenen Referenzabtastung angibt, d.h. M > R. Durch die Differenz $t_M - t_R$ wird folglich ein diskretes Zeitfenster als Zeitdifferenz zwischen dem aktuellen Meßzeitpunkt $t_M$ und dem Referenzzeitpunkt $t_R$ definiert, dessen Breite anhand des langsamsten vorkommenden noch zu detektierenden Einklemmfalls gewählt wird; durch Wahl des Parameters R wird sichergestellt, daß mindestens eine Referenzmessung zu einem Zeitpunkt erfolgt, während dem die Klemmkraft $F_K = 0$ ist.
Die infolge eines Einklemmvorgangs resultierende Änderung des Motordrehmoments $M_d$ wirkt sich sofort auf den Motorstrom I aus, während sich die Motordrehzahl n bzw. die Ankerperiode T wegen der hohen Massenträgheit und auch die Versorgungsspannung U vergleichsweise nur langsam ändern. Die Gleichung (10) kann daher folgendermaßen vereinfacht werden:

$$F_K(t_M) = \eta(U) \cdot [I(t_M) - I(t_R)] \frac{U(t_M) \cdot T(t_M)}{\ddot{U}} \tag{11}.$$

Die Bestimmung der Klemmkraft $F_K$ erfolgt zeitäquidistant und synchron zur Erfassung der jeweiligen Meßgrößen. Hierbei werden gemäß Gleichung (10) für alle Parameter bzw. Meßgrößen die Werte des Referenzzeitpunkts $t_R$ berücksichtigt; bei der vereinfachten Gleichung (11) wird nur für den Motorstrom I auch der Wert zum Referenzzeitpunkt $t_R$ herangezogen, während für alle anderen Parameter lediglich die aktuellen Werte zum jeweiligen Meßzeitpunkt $t_M$ maßgebend sind. Zur Speicherung der für die Bestimmung der Klemmkraft $F_K$ erforderlichen Meßgrößen bzw. Parameter kann ein gleitender Pufferspeicher mit einer Speichertiefe von der Größenordnung der Differenz $t_M$ - $t_R$ vorgesehen werden.

Um Klemmkörper mit unterschiedlicher Steifigkeit und damit unterschiedlich schnell verlaufende Einklemmvorgänge sicher detektieren zu können, erfolgt eine Abtastung der Meßwerte und deren Auswertung in äquidistanten Zeitschritten von beispielsweise einer Millisekunde, während das Zeitfenster mit einer Breite von 100 ms gewählt wird ($t_M$ - $t_R$ = 100 ms). Hiermit sind Einklemmvorgänge der Dauer 100 ms sicher detektierbar, wobei der Schwellwert bzw. Grenzwert zur Detektion einer Einklemmsituation beispielsweise bei 60 N angesetzt wird. Typische Einklemmsituationen zeigen Kraftanstiegsraten von ca. 1 N/ms und Reibungskräfte $F_R$ in der Größenordnung von 50...100N. N. In diesem Fall würde 60 ms nach Beginn der Klemmung der Grenzwert erreicht und der Antrieb bei $F_K$ = 60 N abgeschaltet bzw. reversiert werden.

Zur Unterdrückung von sporadischen Meßfehlern bzw. von kurzzeitigen Änderungen der Reibungscharakteristik des Antriebes mit großer Amplitude wird zum Grenzwertvergleich ein gewichteter Mittelwert aus mindestens zwei mit Gleichung (10) oder Gleichung (11) bestimmten Klemmkräften $F_K$ herangezogen. Bezüglich Gleichung (11) kann ein gewichteter Kraftmittelwert durch gewichtete Mittelwerte der Stromdifferenzwerte $I(t_M)$ - $I(t_R)$ gebildet werden.

**Patentansprüche**

1.  Verfahren zur Überwachung des Öffnungs- und Schließvorgangs bei einem System mit mindestens einem elektromotorisch bewegten Teil (3), gekennzeichnet durch folgende Verfahrensschritten:

    -   während der Bewegung der Teile (3) werden alle Betriebsparameter des Motors (1) kontinuierlich zu zeitlich äquidistanten Meßzeitpunkten erfaßt,

    -   unter Zuhilfenahme der erfaßten Betriebsparameter des Motors (1) wird die sich bei der Bewegung ergebende Energiebilanz gebildet,

    -   die aufgrund der Bewegung resultierende Gesamtkraft ($F_S$) wird aus der Energiebilanz und den konstruktiven Parametern von Motor (1) und Getriebe (2) ermittelt,

    -   die Klemmkraft ($F_K$) wird aus der Gesamtkraft ($F_S$) und einer Reibungskraft ($F_r$) zu jedem Meßzeitpunkt ($t_M$) unter Zuhilfenahme eines Zeitfensters bestimmt, dessen Fensterbreite als Zeitdifferenz zwischen dem jeweiligen Meßzeitpunkt ($t_M$) und einem jeweiligen Referenzzeitpunkt ($t_R$) so gewählt wird, daß mindestens zu einem Referenzzeitpunkt ($t_R$) noch keine Klemmung ($F_K$ : 0) auftritt, wobei die Differenzbildung anhand der Differenz zwischen der ermittelten Gesamtkraft ($F_s$) zum Meßzeitpunkt ($t_m$) und der ermittelten Reibungskraft ($F_r$) zum Referenzeitpunkt ($t_r$) erfolgt.

    -   der zeitliche Verlauf der Klemmkraft ($F_K$) wird bewertet und beim Überschreiten vorgegebener Grenzwerte bzw. Schwellwerte ein Einklemmfall detektiert,

    -   beim Erkennen eines Einklemmfalls werden bestimmte Gegenmeßnahmen initiiert.

2.  Verfahren nach Anspruch 1, dadurch gekennzeichnet, daß bei der Bestimmung der Klemmkraft ($F_K$) ein gewichteter Mittelwert aus mindestens zwei, zu unterschiedlichen Meßzeitpunkten ($t_M$) ermittelten Klemmkräften ($F_K$ ($t_M$)) gebildet wird.

3.  Verfahren nach Anspruch 2, dadurch gekennzeichnet, daß von den Betriebsparametern des Motors (1) zur Bestimmung der zum Referenzzeitpunkt ($t_R$) vorliegenden Referenzgröße nur der Wert des Motorstroms ($I$ ($t_R$)) berücksichtigt wird.

4.  Verfahren nach Anspruch 2 oder 3, dadurch gekennzeichnet, daß zur Bildung des gewichteten Mittelwertes der Klemmkraft ($F_K$) die gewichteten Mittelwerte mindestens zweier Stromdifferenzwerte ($I(t_M)$- $I(t_R)$) herangezogen werden.

**Claims**

1. Method of monitoring the opening and closing operation in a system with at least one part (3) moved by electric motor, characterised by the following method steps:

   - during the movement of the parts (3) all operating parameters of the motor (1) are continuously detected at time-equidistant measurement times,

   - with the aid of the detected operating parameters of the motor (1) the energy balance produced during the movement is formed,

   - the total force ($F_S$) resulting from the movement is ascertained from the energy balance and the constructional parameters of the motor (1) and gearing (2),

   - the clamping force ($F_K$) is determined from the total force ($F_S$) and a frictional force ($F_P$) at each measurement time ($t_M$) with the aid of a time window, the window width of which is chosen as the time difference between the particular measurement time ($t_M$) and a respective reference time ($t_R$) so that at least at one reference time ($t_R$) there is still no clamping occurring ($F_K = 0$), wherein the formation of the difference is achieved with the aid of the difference between the ascertained total force ($F_S$) at the measurement time ($t_M$) and the ascertained frictional force ($F_R$) at the reference time ($t_P$),

   - the development of the clamping force ($F_K$) over time is assessed and when predetermined limiting values or threshold values are exceeded a case of trapping is detected,

   - when a case of trapping is recognised certain countermeasures are initiated.

2. Method as claimed in Claim 1, characterised in that in the determination of the clamping force ($F_K$) a weighted mean value is formed from at least two clamping forces ($F_K(t_M)$) ascertained at different measurement times ($t_M$).

3. Method as claimed in Claim 2, characterised in that of the operating parameters of the motor (1) for determination of the reference value present at the reference time ($t_R$) only the value of the motor current ($I(t_R)$) is taken into account.

4. Method as claimed in Claim 2 or 3, characterised in that in order to form the weighted mean value for the clamping force ($F_K$) the weighted mean values of at least two current difference values ($I(t_M) - I(t_R)$) are used.

**Revendications**

1. Procédé de surveillance du processus d'ouverture et de fermeture dans le cas d'un système comportant au moins une partie (3) déplacée par un moteur électrique, caractérisé par les pas de procédé suivants:

   - pendant le déplacement des parties (3), tous les paramètres de fonctionnement du moteur (1) sont saisis en continu à des instants de mesure équidistants dans le temps,
   - à l'aide des paramètres de fonctionnement du moteur (1) ainsi saisis, se forme le bilan énergétique résultant du déplacement,
   - la force totale ($F_S$) résultant du déplacement est déterminée à partir du bilan énergétique et des paramètres constructifs du moteur (1) et du mécanisme réducteur (2),
   - la force de coincement ($F_K$) est déterminée, à partir de la force totale ($F_S$) et d'une force de frottement ($F_R$), à tout instant de mesure ($t_M$) à l'aide d'une fenêtre de mesure dont la largeur est choisie en tant que différence de temps entre l'instant de mesure respectif ($t_M$) et un instant de référence respectif ($tR$), de façon qu'au moins à un instant de référence ($t_R$) ne survienne encore aucun coincement ($F_K = 0$), étant précisé que la formation de la différence se fait à l'aide de la différence entre la force totale ($Fs$) déterminée à l'instant de la mesure ($t_M$) et la force de frottement ($F_R$) déterminée à l'instant de référence ($t_R$),
   - l'allure de la force de coincement ($F_K$) en fonction du temps est traitée et, en cas de dépassement de valeurs limites ou de valeurs de seuil prescrites, un cas de coincement est détecté,
   - lors de la reconnaissance d'un cas de coincement, des contre-mesures déterminées sont déclenchées.

**2.** Procédé selon la revendication 1, caractérisé par le fait que lors de la détermination de la force de coincement ($F_K$) on forme un valeur moyenne pondérée à partir d'au moins deux valeurs de coincement ($F_K$ ($t_M$)) déterminées à des instants de mesure différents ($t_M$).

**3.** Procédé selon la revendication 2, caractérisé par le fait que, parmi les paramètrcs de fonctionnement du moteur (1), on ne prend en compte, pour déterminer la valeur de référence correspondant à l'instant de référence ($t_R$), que la valeur de l'intensité passant dans le moteur (I ($t_R$)).

**4.** Procédé selon la revendication 2 ou 3, caractérisé par le fait que pour former la valeur moyenne pondérée de la force de coincement ($F_K$), on utilise des valeurs moyennes pondérées d'au moins deux valeurs de différence de l'intensité ($I(t_M)$ - $I(t_R)$).

FIG.